# EUROPÄISCHE PATENTSCHRIFT

(11) **EP 3 974 936 B1**
(45) Veröffentlichungstag und Bekanntmachung des Hinweises auf die Patenterteilung: **07.06.2023**
(21) Anmeldenummer: 20198357.4
(22) Anmeldetag: 25.09.2020
(51) Int. Cl.: G05D 1/02

(54) **KONFIGURIEREN EINER VISUALISIERUNGSVORRICHTUNG FÜR EINEN MASCHINENBEREICH**
CONFIGURATION OF A VISUALISATION DEVICE FOR A MACHINE AREA
CONFIGURATION D'UN DISPOSITIF DE VISUALISATION POUR UNE ZONE DE MACHINE

(43) Veröffentlichungstag der Anmeldung: 30.03.2022
(73) Patentinhaber: SICK AG, 79183 Waldkirch (DE)
(72) Erfinder: Martel, Christopher, 77977 Rust (DE); Reichert, Silja, 79194 Gundelfingen (DE); Pokrandt, Peter, 76474 Au am Rhein (DE); Neumaier, Marcus, 79110 Freiburg (DE)

(56) Entgegenhaltungen:
- DE-U1-212017 000 139
- US-A1- 2019 156 577

## Beschreibung

Die Erfindung betrifft ein Verfahren zum Visualisieren eines Maschinenbereichs, in dem mindestens ein Sensor angeordnet ist, mit einer zuvor dafür konfigurierten Visualisierungsvorrichtung.

In einem Maschinenbereich, beispielsweise einer Roboterzelle, werden eine Vielzahl von Sensoren eingesetzt, um Unfälle zu vermeiden und die Arbeitsvorgänge zu überwachen und zu unterstützen. Bei der Einrichtung und Wartung der Roboterzelle und der Sensoren ist es ausgesprochen hilfreich, Informationen zu den Sensoren zu erhalten, die mit dem bloßen Auge nicht unmittelbar erkennbar sind. Es ist prinzipiell bekannt, derartige Informationen auf einem mobilen Endgerät wie einem Smartphone zu visualisieren. Besonders anschaulich ist eine Überblendung eines Kamerabildes mit den Zusatzinformationen (Augmented Reality).

Voraussetzung für eine korrekte Anzeige der Sensorinformationen ist Kenntnis über die genaue Position des Sensors in Bezug auf die Kamera des mobilen Endgeräts. Im Stand der Technik gibt es Ansätze, physikalische Objekte, zu denen Informationen eingeblendet werden sollen, anhand eines 3D-Modells zu erkennen und zu lokalisieren. Dazu sind nicht nur 3D Modelle der physikalischen Objekte als Referenz erforderlich, der Vergleich zwischen 3D-Modell ist zudem komplex und fehleranfällig, vor allem wenn das Objekt wie häufig teilweise verdeckt ist.

Eine andere Möglichkeit besteht darin, auf dem Objekt jeweils einen optischen Marker anzubringen. Ein solcher Marker muss für jedes Objekt individuell erstellt und im Falle eines Defekts gemeinsam mit dem Objekt ausgetauscht beziehungsweise neu erstellt werden. Bereits die Zugänglichkeit während des Anbringens des Markers ist bei in der Anlage verbauten Sensoren, die beispielsweise ein zusätzliches Schutzgehäuse aufweisen, nicht immer gewährleistet. Dann muss der Marker auch für die Visualisierung lesbar und dafür vom Ort des mobilen Endgeräts aus vollständig und in ausreichender Größe erkennbar sein, trotz Alterungserscheinungen wie Verblassen oder Beschädigungen. Schließlich stellt die korrekte Lokalisierung auf Basis eines derartigen optischen Markers eine bisher noch nicht zufriedenstellend gelöste Herausforderung dar.

Die DE 21 2017 000 139 U1 offenbart ein System zur Ausrichtung eines virtuellen Modells an einem realen Objekt bekannt. Es wird ein erster realer Marker an dem Objekt und ein zweiter realer Marker auf einer gemeinsamen realen Ebene aufliegend angeordnet und an einer realen Kante des Objekts beziehungsweise des zweiten Markers relativ zueinander ausgerichtet. Die Position des ersten Markers und die Position des zweiten Markers werden relativ zur Kamera beziehungsweise in einem Weltkoordinatensystem erfasst und eine Position des zweiten Markers relativ zu dem ersten Marker ermittelt.

Es ist daher Aufgabe der Erfindung, die Visualisierung eines Maschinenbereichs zu verbessern.

Diese Aufgabe wird durch ein Verfahren nach Anspruch 1 gelöst. Die Visualisierungsvorrichtung ist vorzugsweise ein mobiles Endgerät wie ein Tablet, ein Smartphone oder eine VR-Brille. Damit sollen im Betrieb nach abgeschlossenem Konfigurieren Informationen zu Sensoren in einem Maschinenbereich dargestellt werden. Bei dem Maschinenbereich ist zunächst an eine Roboterzelle oder einen Systemverbund auf einem autonomen Fahrzeug (AGV, automated guided vehicle, oder AGC, automated guided container) gedacht, der Begriff kann aber breiter verstanden werden und bezeichnet einen Bereich, in dem zumindest zeitweise mit einer Dynamik durch eine Maschine zu rechnen ist, also auch beispielsweise ein Förderband oder einen Bahnübergang. Es befindet sich folglich mindestens ein Sensor in dem Maschinenbereich, der beispielsweise eine Maschine absichert und bei Unfallgefahr rechtzeitig für deren Überführung in einen sicheren Zustand sorgt oder die Maschine in ihrer Arbeit unterstützt, etwa Arbeitsvorgänge überwacht, Werkstücke oder Werkzeuge erkennt oder Arbeitsergebnisse überprüft. Für derlei Aufgaben sind optoelektronische Sensoren besonders geeignet. Das erfindungsgemäße Verfahren ist ebenso geeignet, Informationen zu anderen Objekten als Sensoren zu visualisieren.

Die Erfindung geht von dem Grundgedanken aus, den mindestens einen Sensor sowie möglicherweise weitere Objekte, zu denen Informationen visualisiert werden sollen, unter Verwendung von Markern zu lokalisieren, die von einer Erfassungseinrichtung aufgenommen, erfasst oder gescannt werden. Die Erfassungseinrichtung ist vorzugsweise ebenfalls ein mobiles Endgerät entsprechend der Visualisierungsvorrichtung und kann damit identisch sein, muss es aber nicht. Erfindungsgemäß sind einerseits Referenzmarker und andererseits Objektmarker vorgesehen, die in dem Maschinenbereich beziehungsweise an dem Sensor angebracht, dann erfasst und miteinander in Beziehung gesetzt werden.

Referenzmarker werden ortsfest zu dem Bezugssystem der Visualisierungsvorrichtung angebracht, etwa auf dem Hallenboden oder am Gestell eines Fahrzeugs, und dadurch wird deren Position zu einem Referenzort. Dabei gibt es zunächst keine Beschränkung, was ein Referenzort sein kann, das entscheidet der Einrichter durch Anbringen des Referenzmarkers. Zwar kommt der Einrichter durch geschickte Wahl mit weniger Referenzmarkern aus, die von den Schlüsselstellen für das Konfigurieren des Maschinenbereichs gut einsehbar sind, aber wesentlich für die Erfindung ist das nicht.

Objektmarker dagegen werden an dem Sensor oder, wenn es mehrere Sensoren gibt, an jedem der Sensoren angebracht. Sie sind nicht als Sensormarker bezeichnet, weil es noch weitere Objekte geben kann, etwa Steuerungen oder Maschinenteile, zu denen auch Informationen visualisiert werden sollen und die in gleicher Weise mittels Objektmarker in die Visualisierung eingebunden werden können wie Sensoren.

Es werden nun mit der Erfassungseinrichtung jeweils mindestens zwei Marker erfasst. An dieser Stelle ist Marker der Oberbegriff für Referenzmarker oder Objektmarker, es werden also mindestens zwei Referenzmarker, zwei Objektmarker oder je ein Referenzmarker und Objektmarker erfasst. Diese Marker beziehungsweise die von ihnen repräsentierten Referenzorte und Sensoren oder Objekte werden miteinander verknüpft, und zwar abstrakt und/oder geometrisch. Abstrakt bedeutet, dass nur eine einfache Relation zwischen den Markern geschaffen wird, die als Nachbarschaftsbeziehung bezeichnet ist. Wenn zwei Marker gemäß der Relation Nachbarn sind, sind sie es aber noch nicht zwangsläufig auch im Sinne der kritischen Geometrie, etwa bei der Relation "wurde vermessen mit Bezug auf". Die geometrische Verknüpfung stellt eine Ortsbeziehung vorzugsweise in drei Dimensionen dar, also beispielsweise eine Transformationsvorschrift oder einen Part von dem einen Marker zu dem anderen Marker. So entsteht ein Verknüpfungsgebilde, mit dem die Sensoren und Objekte bezüglich der Referenzorte lokalisiert sind.

Die Erfindung hat den Vorteil, dass Daten und Informationen zu den Sensoren und Objekte überall im Maschinenbereich und auch in dessen Umgebung visualisiert werden können. Dabei ist der richtige Bezug geschaffen, die Daten und Informationen werden verlässlich und leicht erkennbar den Sensoren und Objekten zugeordnet. Für die Vermessung und auch die spätere Visualisierung genügt ein mobiles Endgerät ohne besondere Voraussetzungen, wie ein Tablet oder Smartphone. Die Inbetriebnahme, Wartung und Diagnose des Maschinenbereichs beziehungsweise der Maschinen und Sensoren darin wird dadurch erheblich vereinfacht. Es werden Zeit und Kosten eingespart und manche Fehler vermieden.

Vorzugsweise wird der Einrichter automatisch von der Erfassungseinrichtung durch die Konfiguration geführt, die jeweils dazu auffordert, Marker zu erfassen und automatisch deren Verknüpfung vornimmt.

Vorzugsweise beginnt die Erfassung der Marker mit einem Referenzmarker. An dessen Referenzort können dann alle abstrakten und geometrischen Verknüpfungen aufgehängt werden. Selbstverständlich kann ein Koordinatenursprung später gegen diesen Referenzort noch verschoben werden. Ein Koordinatensystem wird vorzugsweise relativ zum Maschinenbereich und nicht absolut definiert, insbesondere im Falle eines sich bewegenden Maschinenbereichs wie bei einem Fahrzeug. Es sind vorzugsweise alle Sensoren und sonstigen Objekte von Interesse mit Objektmarkern versehen und Referenzmarker angebracht, so dass von allen relevanten Betrachtungsorten mindestens ein Referenzmarker gut sichtbar ist beziehungsweise wo sie gegebenenfalls zur Überbrückung größerer Strecken benötigt werden.

Vorzugsweise werden Marker paarweise erfasst und miteinander verknüpft, bis die im Maschinenbereich angebrachten Marker erfasst sind. Das vereinfacht die Handhabung und das Einfügen in das Verknüpfungsgebilde. Es werden so lange Paare von Markern erfasst, bis alle vorhandenen Marker zumindest einmal berücksichtigt wurden. Dies liegt in der Regel in der Verantwortung des Einrichters. Wird ein Marker vergessen, kann die spätere Visualisierung lückenhaft sein und dann nachgebessert werden. Grundsätzlich wäre durch Aufnahme eines Übersichtsbildes des Maschinenbereichs und Zählen der Marker oder Kommunikation mit dem Sensorverbund in dem Maschinenbereich auch eine automatische Überprüfung denkbar, ob alle Marker erfasst sind.

Es wird bevorzugt geprüft, ob einer der beiden jeweils paarweise erfassten Marker bereits zuvor erfasst wurde. Das erwünschte Verhalten des Einrichters wäre, jeweils einen schon bekannten Marker und dann einen neuen Marker zu erfassen. Auf diese Weise sind alle bereits erfassten Marker zumindest indirekt miteinander verknüpft, und das Verknüpfungsgebilde wird sukzessive um jeweils einen Marker erweitert. Sind beide neu erfassten Marker noch unbekannt, so kann die Verarbeitung verweigert und das Konfigurieren nach Erfassung mindestens eines anderen Markers fortgesetzt werden. Alternativ wird ein weiteres Verknüpfungsgebilde aus den beiden noch unbekannten Markern erzeugt. Wenn dann später derselbe Marker in mehreren Verknüpfungsgebilden auftaucht, können diese miteinander verbunden werden.

Die Erfassungseinrichtung fordert bevorzugt dazu auf, erst den einen Marker und dann den anderen Marker zu erfassen und zeigt anschließend die erzeugte Verknüpfung zwischen den beiden Markern an, um sie bestätigen zu lassen. Angezeigt wird vorzugsweise die geometrische und nicht die abstrakte Verknüpfung, beispielsweise in einem Bild beider Marker mit der berechneten Verbindungslinie dazwischen. Der Einrichter kann erkennen, wenn die geometrische Verknüpfung nicht stimmt. Dann kann die Berechnung mit einem anderen Verfahren wiederholt oder der Einrichter aufgefordert werden, einen anderen Marker zu scannen oder einen neuen Referenzmarker anzubringen.

Die abstrakte Verknüpfung der Marker erfolgt bevorzugt in Form eines Graphen. Die Knoten des Graphen sind die bereits erfassten und verknüpften Marker beziehungsweise die davon repräsentierten Referenzorte und Objekte oder Sensoren. Die Kanten sind an sich schon die abstrakte Nachbarschaftsbeziehung, zusätzlich kann zu den Kanten die geometrische Transformation beziehungsweise ein geometrischer Pfad von dem einen Knoten oder Marker zu dem anderen Knoten oder Marker hinterlegt sein.

Der Graph wird bevorzugt so angeordnet oder umgeordnet, dass benachbarte Knoten in dem Graphen auch geometrisch benachbart sind. Das kann bereits beim paarweisen Einlesen von Markern oder im Nachhinein geschehen. Es ist nicht garantiert, dass der Einrichter jeweils zwei im geometrischen Sinne benachbarte Marker einliest. Durch Korrektur der Anordnung oder Umordnung wird eine dadurch entstehende Diskrepanz zwischen der Ordnung im Graphen und der geometrischen Ordnung aufgelöst.

Die geometrische Verknüpfung der Marker erfolgt bevorzugt durch Auswertung einer Größe und/oder eines Formats der erfassten Marker. Das ist ein relativ einfaches Verfahren, um die geometrischen Beziehungen zu bestimmen. Bei Markern bekannter Form und Größe lässt sich aus der erfassten Form und Größe auf den Abstand und die Perspektive der Erfassung schließen und somit der Marker relativ zu der Erfassungseinrichtung lokalisieren. Das ist aber nur ein Beispiel für ein Lokalisierungsverfahren, es sind zahlreiche andere Lokalisierungsverfahren bekannt, insbesondere eine Distanzmessung durch 3D-Verfahren oder Lichtlaufzeitmessung.

Die geometrische Verknüpfung der Marker erfolgt bevorzugt dadurch, dass die Eigenbewegung der Erfassungsvorrichtung zwischen den Erfassungen verschiedener Marker überwacht wird, dass mindestens zwei Marker zugleich erfasst werden oder dass Erfassungen während der Ausrichtung der Erfassungsvorrichtung von dem einen Marker zu dem anderen Marker ausgewertet werden. Wenn der Einrichter nacheinander zwei Marker erfasst und diese beiden Marker dann relativ zur Erfassungseinrichtung lokalisiert werden, so kann sich durch zwischenzeitliche Bewegungen und Drehung der Erfassungseinrichtung beim Schluss auf die relative Anordnung der beiden Marker zueinander ein Fehler ergeben. Dieser lässt sich herausrechnen, in dem die Eigenbewegung der Erfassungsvorrichtung beispielsweise mit einem Trägheitssensor (IMU, inertial measurement unit) erfasst wird. Auf die Eigenbewegung kann auch durch Zwischenerfassungen während der Ausrichtung von dem einen Marker auf den anderen Marker geschlossen werden, etwa mit einem Verfahren des optischen Flusses oder indem Zwischenbilder aneinandergefügt werden. Vergleichsweise einfach ist die Situation, wenn beide Marker im selben Bild erfasst sind, dann entsteht der diskutierte Fehler nicht. Der Einrichter kann auch darauf achten, die Erfassungseinrichtung zwischen den beiden Markern möglichst wenig zu bewegen und den besagten Fehler dadurch klein zu halten, so dass er nicht korrigiert werden muss.

Vorzugsweise wird einem erfassten Referenzmarker ein Referenzort und/oder einem erfassten Objektmarker der davon repräsentierte Sensor zugeordnet. Der Referenzort kann eine geometrische Position sein, etwa in Form von Koordinaten, aber auch lediglich ein Punkt in dem Verknüpfungsgebilde, insbesondere ein Knoten in dem Graphen. Statt des Objektmarkers oder zusätzlich dazu kann der davon repräsentierte Sensor in das Verknüpfungsgebilde abstrakt und/oder geometrisch eingeordnet werden. Dabei sind noch zusätzliche Konfigurationsschritte durch den Einrichter denkbar, etwa die Eingabe eines sprechenden Namens für die spätere Visualisierung wie "Laserscanner für Schutzfeld an Materialschleuse".

Ein Objektmarker ist bevorzugt auf einer Schablone mit einer Aufhängung zum Anbringen an dem Sensor angeordnet. Objektmarker werden dabei nicht wie herkömmlich direkt auf dem Objekt oder Sensor angeordnet, sondern an einer vorzugsweise wiederverwendbaren Schablone, die dann mit Hilfe der Aufhängung am Sensor angebracht wird. Das sorgt nicht nur für eine besonders einfache Möglichkeit, Objektmarker verlässlich anzubringen und wieder zu entfernen. Die Schablone positioniert den Objektmarker in einer definierten Weise am Sensor, was die weitere Verarbeitung erleichtert.

In dem Objektmarker ist bevorzugt eine Information über die Position des Sensors relativ zu dem Objektmarker eincodiert. Dank der Schablone ist die relative Lage des Objektmarkers zum eigentlichen Sensor festgelegt und vorab bekannt, beispielsweise dessen optischem Zentrum. Damit kann der Versatz zwischen Objektmarker und eigentlicher Sensorposition verlässlich und einfach korrigiert werden. Die entsprechende Information kann unmittelbar als Transformation oder Relativkoordinaten eincodiert sein, oder aus einer Identität des Objektmarkers wird dies im Nachhinein ergänzt.

Zum Visualisieren des Maschinenbereichs mit der konfigurierten Visualisierungsvorrichtung wird zunächst ein Referenzmarker erfasst, und dann werden virtuelle Sensorinformationen aus der Umgebung des Referenzmarkers dargestellt. Der Anwender stellt sich an eine Position im Maschinenbereich oder in dessen Nähe und richtet die Visualisierungsvorrichtung auf einen Referenzmarker, anhand dessen sich die Visualisierungsvorrichtung orientiert und herausfindet, welche Sensoren sich in der Umgebung befinden. Zu diesen Sensoren werden dann virtuelle Sensorinformationen am richtigen Ort dargestellt. Die Objektmarker sind zu diesem Zeitpunkt, zu dem die Konfiguration beendet ist, vorzugsweise wieder entfernt, sie werden jedenfalls nicht mehr benötigt.

Es werden bevorzugt nur Sensorinformationen von Sensoren dargestellt, die gemäß der abstrakten Verknüpfung Nachbarn des erfassten Referenzmarkers sind. Das ist eine Möglichkeit, die vermutlich aus der derzeitigen Position der Visualisierungsvorrichtung relevanten und sichtbaren Sensoren auszuwählen. Vorzugsweise werden direkte Nachbarn ausgewählt, es sind aber auch 2er-Nachbarschaften und dergleichen sowie eine Beschränkung auf eine Höchstentfernung denkbar.

Die Sensorinformationen werden bevorzugt als Überlagerung mit einem Livebild dargestellt. Damit werden die virtuellen Informationen dem realen Bild überblendet, und so wird eine besonders intuitive Darstellung erreicht (Augmented Reality).

Die darzustellenden Sensorinformationen werden bevorzugt von dem Sensor, von einer an den Sensor angeschlossenen Steuerung und/oder aus einer Datenbank für Sensoren ausgelesen. Über den Objektmarker oder eine Konfigurationseingabe bei dessen Einlesen können schon einige statische Informationen erfasst werden. Weitere Informationen kann der Sensor selbst oder ein übergeordnetes System liefern, an das der Sensor angeschlossen ist. Als weitere Quelle ist eine Datenbank mit Sensordaten denkbar.

Die Sensorinformationen umfassen bevorzugt mindestens eine der folgenden Informationen: Name des Sensors, Adresse des Sensors, Typ des Sensors, ein grafisches Modell des Sensors, eine Ausrichtung und/oder ein Erfassungsbereich des Sensors, insbesondere eine Scanebene, ein Sichtbereich (FOV, Field of View), ein Schutzfeld oder ein interessierender Bereich, ein Sensorparameter, wie dessen Temperatur oder Konfiguration, und/oder Messdaten des Sensors in beliebiger Aufbereitung als Rohdaten, Zahlen, Bilder, Punktwolken, Gitternetzmodelle der von dem Sensor erfassten Objekte und dergleichen.

Eine Schablone weist einen Objektmarker für eine Ausführungsform des erfindungsgemäßen Konfigurationsverfahrens, eine für einen Sensor passender Aufhängung sowie eine in den Objektmarker codierte Information auf, mit der ein Ort des Objektmarkers in einen Ort des Sensors umgerechnet wird. Über die Schablone kann der Objektmarker sehr einfach in definierter Weise an dem Sensor angebracht werden. Es ist nicht mehr nötig, pro Objekt individuelle Objektmarker zu erzeugen. Vielmehr kann eine Schablone mit einem für den Sensortyp passenden Objektmarker mehrfach wiederverwendet werden.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung einer Roboterzelle mit einer Vielzahl von Sensoren;
- Fig. 2a: eine Schablone mit einem Objektmarker und einer Aufhängung zum Anbringen an einem Sensor;
- Fig. 2b: eine Schablone ähnlich Figur 2a mit einem anderen Objektmarker und einer anderen Aufhängung für einen anderen Sensortyp;
- Fig. 3: eine Übersichtsdarstellung der Roboterzelle gemäß Figur 1 nun mit in der Roboterzelle angebrachten Referenzmarkern und an den Sensoren angebrachten Objektmarkern;
- Fig. 4: ein beispielhaftes Ablaufdiagramm zur Erfassung der Marker während einer Konfigurationen einer Visualisierung der Roboterzelle;
- Fig. 5: eine beispielhafte Darstellung des ermittelten Pfades zwischen zwei erfassten Markern zur Überprüfung und Bestätigung des Pfades; und
- Fig. 6: ein beispielhafter Graph, der während einer Konfiguration aus den sukzessive erfassten Markern in der Roboterzelle gemäß Figur 3 erzeugt ist.

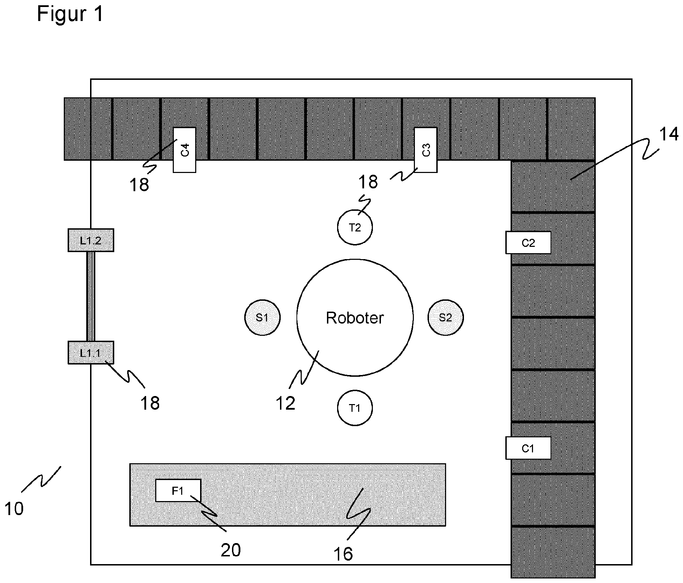

Figur 1 zeigt eine Übersichtsdarstellung eines Maschinenbereichs 10, der hier beispielhaft als Roboterzelle ausgestaltet ist. Darin befinden sich außer einem Roboter 12 weitere Elemente, für die hier stellvertretend ein Förderband 14 und ein Schaltschrank 16 dargestellt sind. Eine Vielzahl von Sensoren 18 ist in dem Maschinenbereich 10 montiert, um den Roboter 12, das Förderband 14 und weitere Elemente des Maschinenbereichs 10 zu überwachen, beispielsweise Zugangswege oder Materialien, die dem Roboter 12 zugeführt und von diesem bearbeitet werden. Die Sensoren 18 können autark arbeiten, sind aber in der Regel untereinander und/oder mit einer als F1 bezeichneten übergeordneten Steuerung 20 verbunden. Die übergeordnete Steuerung 20 oder Zellensteuerung ist vorzugsweise ebenfalls mit der Robotersteuerung des Roboters 12 verbunden oder fungiert mindestens teilweise als diese Robotersteuerung.

In dem Maschinenbereich 10 der Figur 1 sind folgende Sensoren 18 verbaut: vier Laserscanner S1, S2, T1 und T2 um den Roboter 12 herum, vier Kameras C1 bis C4 an dem Förderband 14 und ein Lichtgitter L1.1-L1.2, das einen Zugang absichert. Die Kameras C1 bis C4 sind untereinander vom gleichen Sensortyp. Bei den Laserscannern sind zwei sichere Laserscanner S1 und S2 zur Absicherung oder Unfallvermeidung und zwei nicht sichere Laserscanner T1 und T2 für allgemeine Überwachungs- oder Automatisierungsaufgaben des Roboters 12 vorgesehen. Das Lichtgitter mit seiner Sicherheitsfunktion ist ebenfalls sicher ausgestaltet. Sichere Sensoren sind durch eine Grauschattierung dargestellt. Die Unterscheidung in sichere und nicht sichere Sensoren ist in der Praxis regelmäßig sehr bedeutsam, aber hier lediglich eine Möglichkeit für eine Unterscheidung zwischen Sensortypen. Insgesamt ist die Auswahl und Anordnung der Sensoren 18 in Figur 1 rein beispielhaft zu verstehen.

Die Erfindung befasst sich nicht mit der Ausgestaltung einer Roboterzelle oder allgemeiner eines Maschinenbereichs 10 sowie der Auswahl und Montage der benötigten Sensoren 18. Sie soll vielmehr bei der Konfiguration der Sensoren 18 unterstützen, insbesondere im Zuge der Inbetriebnahme, Diagnose oder Wartung, und dafür eine Visualisierung des Maschinenbereichs 10 samt zusätzlicher Informationen über die Sensoren 18 beziehungsweise der Sensoren 18 leisten. Das schließt natürlich nicht aus, dass der Einrichter anhand der Visualisierung den Bedarf zusätzlicher Sensoren 18 oder einer anderen Anordnung der Sensoren 18 feststellt.

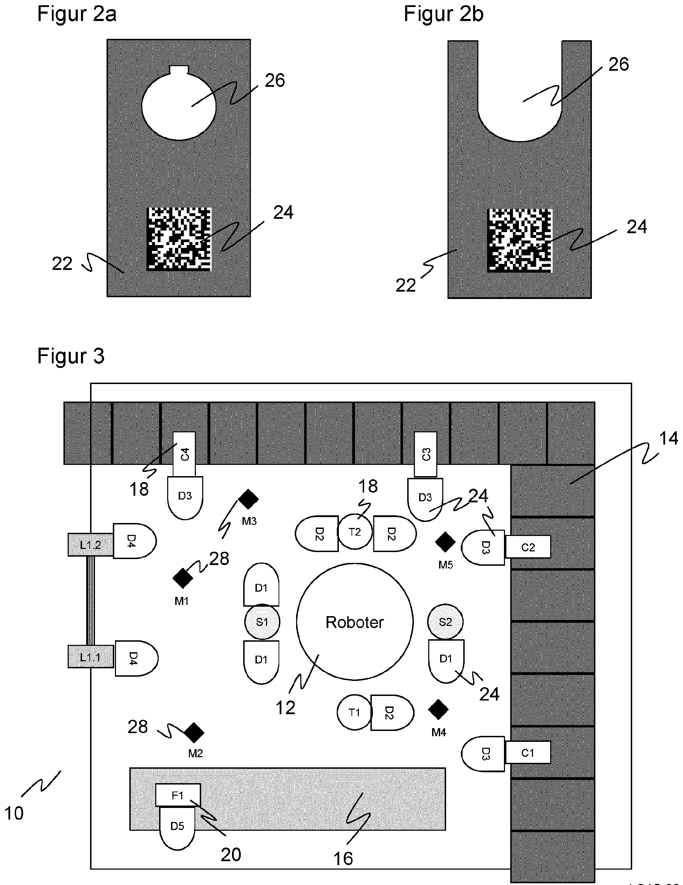

Figur 2a zeigt eine Schablone 22 mit einem Objektmarker 24, der hier als optischer 2D-Code ausgeführt ist. Der Objektmarker 24 kann durch Bildverarbeitung gelesen werden, beispielsweise von der Kamera eines Smartphones. Die konkrete Gestaltung des optischen Codes sowie das Leseverfahren sind nicht Gegenstand der Erfindung, dafür gibt es herkömmliche Lösungen. Es ist prinzipiell denkbar, einen nicht optischen Objektmarker 24 einzusetzen, etwa ein RFID-Tag, aber die Lokalisierung funktioniert am verlässlichsten mit optischen Codes, und gängige Endgeräte verfügen über Kameras, nicht aber unbedingt über einen RFID-Leser.

An der Schablone 22 ist ferner eine Aufhängung 26 vorgesehen, die an einen bestimmten Sensortyp angepasst ist. Mit Hilfe der Aufhängung 26 kann die Schablone 22 in wohldefinierter und verlässlicher Weise an einem Sensor 18 des passenden Sensortyps angebracht werden, unabhängig von Zugänglichkeit und Größe des Sensors 18. Der Objektmarker 24 befindet sich dann dank der Schablone 22 in einer bekannten relativen Lage zu dem Sensor 18. Die Transformation vom Ort des Objektmarkers 24 auf den Ort des Sensors 18 ist in den Objektmarker 24 codiert, sei es direkt beispielsweise in Form von Relativkoordinaten oder indirekt, indem eine Identitätsinformation des Objektmarkers 24 in einer Datenbank oder dergleichen mit den zugehörigen Relativkoordinaten verknüpft wird. Dank der Schablone 22 und dem nun bekannten, durch die Schablone 22 verursachten Versatz zwischen Objektmarker 24 und Sensor 18 wird später bei der Visualisierung der Sensor 18 am richtigen Ort und nicht etwa an demjenigen des Objektmarkers 24 gezeigt. Die Schablone 22 wird nur während der Konfiguration der Visualisierung benötigt und kann daher mehrfach verwendet werden.

Figur 2b zeigt eine Schablone 22 mit einem anderen Objektmarker 24 für einen anderen Sensortyp. Außer dem Codeinhalt des Objektmarkers 24 wird dabei auch die Aufhängung 26 variiert, damit die Schablone 22 an einem Sensor 18 des anderen Sensortyps befestigt werden kann. So wird vorzugsweise jeweils eine Schablone 22 mit passendem Objektmarker 24 und passender Aufhängung 26 erzeugt, und dies muss nur einmal je Sensortyp und nicht je individuellem Sensor 18 erfolgen. Sofern wie in Figur 1 mehrere Sensoren 18 desselben Sensortyps vorhanden sind, werden weiterhin mehrere, dann aber untereinander vorzugsweise gleichartige Schablonen 22 benötigt. Als Alternative dazu, für jeden Sensortyp eine eigene Schablone 22 zu entwerfen, sind auch generische Schablonen denkbar. Deren Aufhängung ist möglichst flexibel, oder sie werden mit Draht, Kleber oder dergleichen angebracht. Die generische Schablone zeigt den Ort an, etwa mit Hilfe einer Pfeilspitze, zu dem der Objektmarker 24 den Versatz codiert. Bei sorgfältiger Anbringung der Schablone entsteht dann ebenfalls kein Versatz zwischen Objektmarker 24 und Sensor 18. Die Schablonen 22 können auch für andere Objekte entworfen werden als Sensoren 18, beispielsweise Maschinenteile, oder eine generische Schablone 22 kann an einem anderen Objekt angebracht werden. So werden derartige Objekte in die Visualisierung einbezogen.

Figur 3 zeigt nochmals den Maschinenbereich 10 aus der Figur 1, nachdem nun Objektmarker 24 an denen Sensoren 18 und als Beispiel für ein anderes Objekt auch an der Steuerung 20 sowie Referenzmarker 28 an mehreren Positionen des Maschinenbereichs 10 angebracht wurden, beispielsweise auf dem Hallenboden.

Pro zu lokalisierendem Objekt, also Sensor 18, aber auch Maschinenteil, Steuerung 20 oder dergleichen, wird ein Objektmarker 24 angebracht. Dies geschieht vorzugsweise über Schablonen 22 und alternativ direkt auf dem Sensor 18 oder sonstigen Objekt. Objektmarker 24 werden bevorzugt nicht individuell für einen Sensor 18 erstellt, sondern für einen Sensortyp. In dem Beispiel der Figur 3 gibt es fünf verschiedene Objektmarker 24, die mit D1 für sichere Laserscanner S1, S2, mit D2 für nicht sichere Laserscanner T1, T2, mit D3 für (nicht sichere) Kameras C1 bis C4, mit D4 für (sichere) Lichtgitter L1.1-L1.2 und mit D5 für den Steuerungstyp der Steuerung 20 bezeichnet sind, die als Beispiel für ein weiteres zu visualisierendes Objekt fungiert, das kein Sensor 18 ist. An den Sensoren S1 und T2 sind jeweils zwei Objektmarker 24 gezeigt, die nicht tatsächlich doppelt angebracht werden sollen, sondern nur veranschaulichen, dass es mehrere Möglichkeiten beziehungsweise Richtungen gibt, eine Schablone 22 zu befestigen.

Diese Richtung kann die Blickrichtung eines Sensors 18 oder sonstigen Objekts wiedergeben. Bei dem Lichtgitter L1.1-L1.2 dagegen sollten tatsächlich beide Säulen mit einem eigenen Objektmarker 24 versehen sein, zwischen denen die Überwachungsstrahlen verlaufen. Wie schon im Zusammenhang mit Figur 2a-b erwähnt, enthält ein Objektmarker 24 vorzugsweise die Information, um welches Objekt beziehungsweise welchen Sensor 18 es sich handelt, bevorzugt auf Ebene von Typen, Varianten oder Familien und nicht individuellen Objekten oder Sensoren, sowie eine Transformation vom Ort oder Ursprung des Objektmarkers 24 zum Ort oder Ursprung des Objekts beziehungsweise Sensors 18. Die Transformation ermöglicht eine Visualisierung am gewünschten oder richtigen Ort und nicht demjenigen des Objektmarkers 24.

Zusätzlich zu den Objektmarkern 24 wird in dem Maschinenbereich 10 mindestens ein Referenzmarker 28 angebracht. Die Referenzmarker 28 können vom Einrichter beliebig platziert werden. Sie enthalten eine eindeutige Kodierung, beispielsweise eine 32-stellige Identifikationsnummer (UUID, Universally Unique Identification), um Verwechslungen mit anderen Markern im Maschinenbereich 10 auszuschließen. Die Referenzmarker 28 dienen als Bezugspunkt. Später bei der Visualisierung wird anhand eines aus der Nähe eingelesenen Referenzmarkers 28 festgestellt, wo der Ursprung der Visualisierung liegt und welche Sensoren 18 sich in der Umgebung befinden.

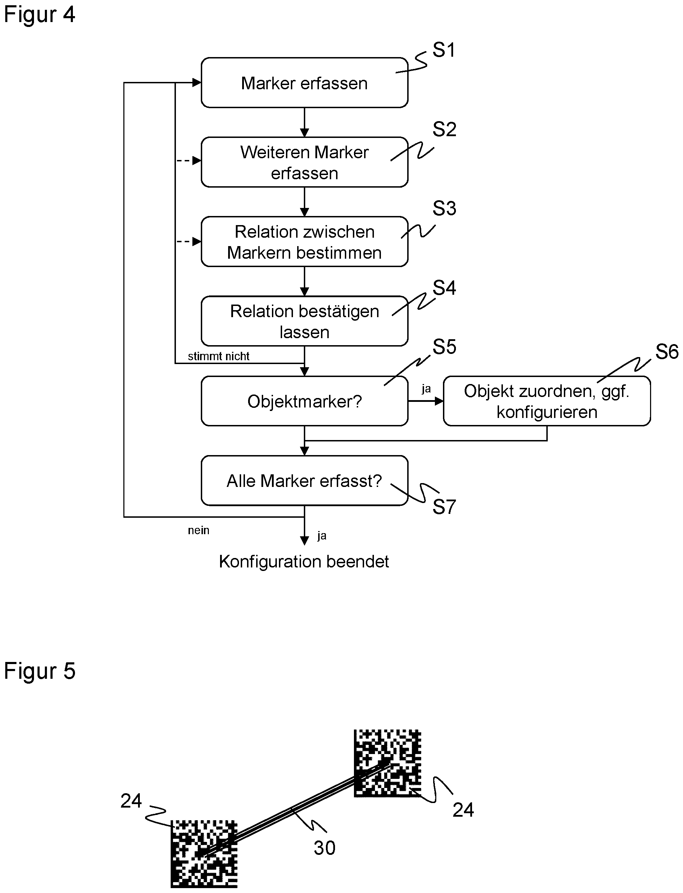

Figur 4 zeigt ein beispielhaftes Ablaufdiagramm für eine Konfiguration einer Visualisierung des Maschinenbereichs 10 auf Basis der Objektmarker 24 und Referenzmarker 28. Dieser Ablauf basiert auf einem paarweisen Einlesen von Markern 24, 28. Das ist ein einfaches Vorgehen, aber alternativ können auch mehr als zwei Marker 24, 28 je Konfigurationsschritt eingelesen und zueinander in Beziehung gesetzt werden. Die Konfiguration erfolgt in einem mobilen Endgerät, das an einigen Stellen als Erfassungseinrichtung bezeichnet wird, beispielsweise einem Smartphone oder einem Tablet, das den Einrichter automatisch durch die Konfiguration führt.

In einem Schritt S1 wird ein erster Marker 24, 28 eingelesen, der Einrichter also dazu aufgefordert, die Erfassungseinrichtung auf einen einzulesenden Marker 24, 28 zu richten und beispielsweise eine Bildaufnahme einer Kamera auszulösen. Zu Beginn der Konfiguration ist von Vorteil, wenn zunächst ein Referenzmarker 28 eingelesen wird. Dieser bildet dann den Bezugspunkt oder Ursprungspunkt. Alternativ kann aber die Verankerung zu einem späteren Zeitpunkt erfolgen, nachdem ein Referenzmarker 28 erfasst ist.

In einem Schritt S2 wird ein zweiter Marker 24, 28 eingelesen. Somit ist dann ein Paar zweier Marker eingelesen, und zwar nach Wahl des Einrichters ein Paar aus zwei Objektmarkern 24, aus einem Objektmarker 24 und einem Referenzmarker 28 oder aus zwei Referenzmarkern 28. Wie schon zum Schritt S1 ausgeführt, kann der Einrichter beim ersten Paar aufgefordert werden, zumindest einen Referenzmarker 28 zu wählen, so dass es von Anfang an einen Ursprungspunkt gibt. In späteren Iterationen, beim Einlesen weiterer Paare, kann die Erfassungseinrichtung einfordern, dass jeweils einer der eingelesenen Marker 24, 28 schon bekannt ist, um das Verknüpfungsgebilde aus den während der Konfiguration eingelesenen Markern 24, 28 sukzessive zu erweitern. Alternativ werden zwei oder noch mehr zunächst getrennte Verknüpfungsgebilde erzeugt, die dann zusammengefügt werden können, sobald sie einander in mindestens einem bekannt gewordenen Marker 24, 28 überschneiden.

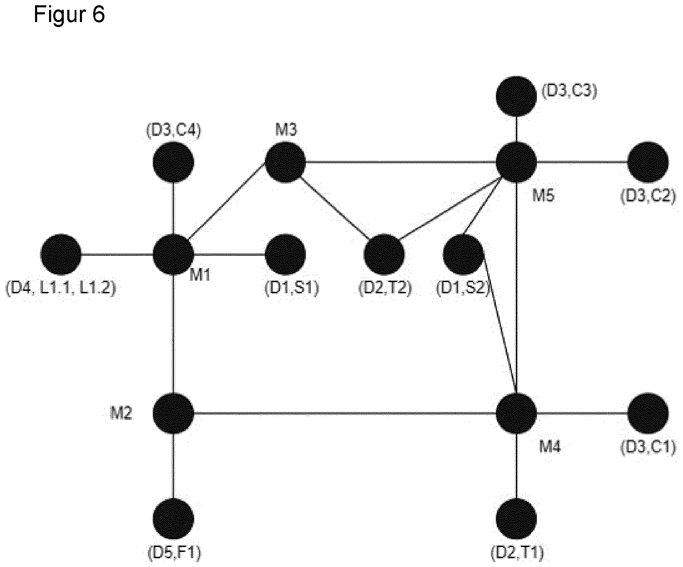

In einem Schritt S3 wird automatisch eine Relation zwischen den beiden eingelesenen Markern 24, 28 bestimmt. Eine abstrakte Relation besteht bereits dadurch, dass die beiden Marker 24, 28 gemeinsam eingelesen und nun automatisch aufeinander referenziert werden. Mit dieser Relation lässt sich beispielsweise ein Graph erzeugen, der später unter Bezugnahme auf die Figur 6 erläutert wird. Es soll aber auch weitergehend die geometrische Relation zwischen den beiden eingelesenen Markern 24, 28 ermittelt werden, also eine Transformation oder ein Pfad von dem einen Marker 24, 28 zu dem anderen Marker 24, 28. Dafür sind verschiedene Bildauswertungsverfahren einsetzbar, die an sich bekannt sind und hier nicht weiter erläutert werden. Nur skizzierend kann beispielsweise aus der Größe eines Markers 24, 28 oder dessen perspektivische Verzerrung auf die gegenseitige Entfernung und Lage geschlossen werden. Damit lässt sich diejenige Transformation finden, die den einen Marker 24, 28 oder dessen Codeelemente oder Umhüllende in den anderen Marker 24, 28 überführt. Eine besondere Gestaltung der Marker 24, 28 kann solche Bildverarbeitungen unterstützen.

In einem optionalen Schritt S4 wird die geometrische Relation angezeigt, um sie durch den Einrichter bestätigen zu lassen. Das ist für zwei beispielhafte Objektmarker 24 in Figur 5 veranschaulicht. Der berechnete Pfad 30 zwischen den beiden Objektmarkern 24 wird angezeigt, so dass der Einrichter nachvollziehen kann, ob dieser Pfad 30 tatsächlich die beiden Objektmarker 24 ineinander überführt. Nach der Bestätigung durch den Einrichter wird die geometrische Relation abgespeichert. Ist der Einrichter mit dem Pfad 30 nicht einverstanden, so kehrt die Erfassungseinrichtung zu einem der Schritte S1 bis S3 zurück. Folglich wird versucht, die geometrische Relation mit den eingelesenen Markern 24, 28 neu zu berechnen, oder zumindest einer der Marker 24, 28 wird neu eingelesen, d. h. vorzugsweise zunächst zumindest ein anderer Marker 24, 28 eingebunden. Eine andere Abhilfemaßnahme ist die Anbringung eines weiteren Referenzmarkers 28.

In einem Schritt S5 wird geprüft, ob einer der eingelesenen Marker 24, 28 ein Objektmarker 24 ist. Diesem wird dann in einem Schritt S6 ein Sensor 18 oder Objekt zugeordnet. Dabei können optional auch noch Benutzereingaben erfolgen, mit denen beispielsweise der Sensor 18 oder das Objekt mit einem eigenen Namen versehen wird. Referenzmarkern 28 kann ein Referenzort zugeordnet werden, beispielsweise eine Koordinate in einem Koordinatensystem. Der erste eingelesene Referenzmarker 28 je Verknüpfungsgebilde legt vorzugsweise das Koordinatensystem fest, wobei ein Ursprung je nach Wunsch noch verschoben werden kann. Werden mehrere Verknüpfungsgebilde miteinander kombiniert, nachdem ein Marker 24, 28 in beiden auftaucht, so werden auch die Koordinatensysteme angeglichen.

In einem Schritt S7 ist die Konfiguration beendet, falls alle Marker 24, 28 einmal erfasst sind. Ansonsten wird beim Schritt S1 in einer weiteren Iteration ein neues Paar von Markern 24, 28 erfasst und verarbeitet. Es liegt vorzugsweise in der Verantwortung des Einrichters, alle Marker 24, 28 zu berücksichtigen. Es ist aber auch denkbar, dass die Erfassungseinrichtung Kenntnis über die Gesamtzahl der Marker 24, 28 hat, beispielsweise über eine Vorgabe, aus einem Übersichtsbild des Maschinenbereichs 10 mit allen Markern 24, 28 oder durch Kommunikation mit den Sensoren 18 beziehungsweise der Steuerung 20.

Am Ende dieser Konfiguration sind die geometrischen Relationen zwischen allen Markern 24, 28 bekannt und somit alle Sensoren 18 und sonstigen Objekte wie die Steuerung 20 mit Objektmarkern 24 lokalisiert. Die Objektmarker 24 beziehungsweise die Schablonen 22 können nun entfernt werden.

Figur 6 zeigt beispielhaft einen nach abgeschlossener Konfiguration erzeugten Graphen für den in Figur 3 gezeigten Maschinenbereich 10. Die Knoten entsprechen den Objektmarkern 24 mit den davon repräsentierten Sensoren 18 und sonstigen Objekten wie der Steuerung 20 sowie den Referenzmarkern 28. Die Kanten entsprechen den Nachbarschaftsrelationen. Sollte der Einrichter in den Schritten S1 und S2 ein nicht benachbartes Paar von Markern 24, 28 gewählt haben, so können anhand der geometrischen Beziehungen die Kanten neu geordnet werden, so dass die Nachbarschaftsrelationen im Graph mit der tatsächlichen Geometrie übereinstimmen. Zu den Kanten wird vorzugsweise auch die geometrische Transformation abgespeichert. Somit ist also beispielsweise nicht nur bekannt, dass der Referenzmarker M1 Nachbar des Referenzmarkers M3 im Graphen ist, sondern auch, wie M1 geometrisch in M3 überführt wird, beziehungsweise wo M3 bezüglich M1 lokalisiert ist. Kanten stellen nicht notwendig nur Relationen zwischen einem Referenzmarker 28 und einem Objektmarker 24 dar, sondern möglicherweise auch eine Relation von einem Referenzmarker 28 zu einem weiteren Referenzmarker 28. Das dient gleichsam als Brücke, um zu große Entfernungen ohne optische Verbindung zu überwinden. Abweichend von der Darstellung in Figur 6 kann es auch mehrere Graphen statt nur eines einzigen zusammenhängenden Graphen geben.

Nach abgeschlossener Konfiguration können nun Sensordaten der Sensoren 18 visualisiert werden. Als Visualisierungsvorrichtung dient wiederum ein mobiles Endgerät, das mit der Erfassungseinrichtung der Konfiguration übereinstimmen kann, aber nicht muss, beispielsweise ein Smartphone, ein Tablett oder eine VR-Brille. Der Anwender scannt einen Referenzmarker 28 in seiner Nähe. Anhand des Graphen werden Sensoren 18 und ein etwaiges weiteres Objekt wie die Steuerung 20 in der Umgebung des gescannten Referenzmarkers 28 lokalisiert, insbesondere die direkten oder indirekten Nachbarn des gescannten Referenzmarkers 28 in dem Graphen. Die notwendigen geometrischen Transformationen sind aus der Konfiguration in den Kanten des Graphen hinterlegt. Somit können die Sensorinformationen oder Objektinformationen am richtigen Ort visualisiert werden. Vorzugsweise wird dies von einem Kamerabild überlagert (Augmented Reality).

Es ist eine große Vielfalt an visualisierten Informationen vorstellbar. Neben Name und Typ eines Sensors 18 kann dessen Konfiguration veranschaulicht werden, beispielsweise ein Schutzfeld eines Laserscanners angezeigt werden, ein Betriebsparameter wie die Temperatur des Sensors 18 angezeigt werden, oder es werden Messdaten des Sensors 18 visualisiert. Im Fall von anderen Objekten wie der Steuerung 20 werden die Daten auf eine generische Beschreibung übersetzt und mit einer zugehörigen Visualisierung versehen. Diese kann abhängig von der Art der Visualisierung geladen werden.

Die Erfindung wurde bisher am Beispiel einer Roboterzelle als Maschinenbereich 10 beschrieben. Das Konzept kann auf ein vorzugsweise autonomes Fahrzeug übertragen werden. Referenzmarker 28 wie Sensoren 18 befinden sich auf dem Fahrzeug und damit im Bezugssystem des Fahrzeugs zueinander in fester geometrischer Beziehung, so dass die Bewegung des Fahrzeugs gegenüber der äußeren Umgebung keine Rolle spielt und die erfindungsgemäße Konfiguration und Visualisierung mit einem ruhenden Maschinenbereich 10 vergleichbar bleibt. Ein Maschinenbereich 10 ist aber weder auf einer Roboterzelle noch ein Fahrzeug beschränkt, sondern beschreibt einen Bereich, in dem sich mindestens ein Sensor 18 befindet und in den zumindest zeitweise Eingriffe durch eine Maschine erfolgen, wofür es unzählige weitere Beispiele wie ein Förderband oder auch eine Eisenbahnkreuzung gibt.

In einer Erweiterung kann eine Verknüpfung mit CAD-Informationen des Maschinenbereichs 10 erfolgen, die im Falle einer Roboterzelle oder eines Fahrzeugs in der Regel ohnehin existieren. Damit können Marker 24, 28 noch genauer lokalisiert oder auch eine optimale Anzahl und Position von Referenzmarkern 28 geplant werden. 3D-Modelle lassen sich zusätzlich verwenden, um die Sensoren 18 selbst in Ergänzung der Marker 24, 28 zu lokalisieren.

## Patentansprüche

1. Verfahren zum Visualisieren eines Maschinenbereichs (10), in dem mindestens ein Sensor (18) angeordnet ist, mit einer Visualisierungsvorrichtung, wobei zum Konfigurieren der Visualisierungsvorrichtung in dem Maschinenbereich (10) mindestens ein Referenzmarker (28) ortsfest zu einem Bezugssystem der Visualisierungsvorrichtung angebracht wird, so dass dessen Position zu einem Referenzort wird, und an dem mindestens einen Sensor (18) mindestens ein Objektmarker (24) angebracht wird, und wobei mit einer Erfassungseinrichtung jeweils mindestens zwei Marker (24, 28) erfasst werden, d.h. mindestens einmal ein Referenzmarker (28) und mindestens einmal ein Objektmarker (24), und die beiden Marker (24, 28) geometrisch in ihrer gegenseitigen räumlichen Lage miteinander verknüpft werden, so dass ein Verknüpfungsgebilde entsteht, mit dem der mindestens eine Sensor (18) bezüglich des Referenzortes lokalisiert ist, wobei ein die Konfigurierung durchführender Einrichter automatisch von der Erfassungseinrichtung durch die Konfiguration geführt wird, die jeweils dazu auffordert, Marker zu erfassen und die automatisch deren Verknüpfung vornimmt,
und wobei zum Visualisieren des Maschinenbereichs (10) mit der derart konfigurierten Visualisierungsvorrichtung zunächst ein Referenzmarker (28) erfasst wird und dann virtuelle Sensorinformationen aus der Umgebung des Referenzmarkers (28) dargestellt werden.

2. Verfahren nach Anspruch 1,
wobei Marker (24, 28) paarweise erfasst und miteinander verknüpft werden, bis die im Maschinenbereich (10) angebrachten Marker (24, 28) erfasst sind, wobei insbesondere geprüft wird, ob einer der beiden jeweils paarweise erfassten Marker (24, 28) bereits zuvor erfasst wurde.

3. Verfahren nach Anspruch 2,
wobei die Erfassungseinrichtung dazu auffordert, erst den einen Marker (24, 28) und dann den anderen Marker (24, 28) zu erfassen und anschließend die erzeugte Verknüpfung zwischen den beiden Markern (24, 28) anzeigt, um sie bestätigen zu lassen.

4. Verfahren nach einem der vorhergehenden Ansprüche,
wobei die Verknüpfung der Marker (24, 28) in Form eines Graphen erfolgt, wobei insbesondere der Graph so angeordnet oder umgeordnet wird, dass benachbarte Knoten in dem Graphen auch geometrisch benachbart sind.

5. Verfahren nach einem der vorhergehenden Ansprüche,
wobei die geometrische Verknüpfung der Marker (24, 28) durch Auswertung einer Größe und/oder eines Formats der erfassten Marker (24, 28) erfolgt.

6. Verfahren nach einem der vorhergehenden Ansprüche,
wobei die geometrische Verknüpfung der Marker (24, 28) dadurch erfolgt, dass die Eigenbewegung der Erfassungsvorrichtung zwischen den Erfassungen verschiedener Marker (24, 28) überwacht wird, dass mindestens zwei Marker (24, 28) zugleich erfasst werden oder dass Erfassungen während der Ausrichtung der Erfassungsvorrichtung von dem einem Marker (24, 28) zu dem anderen Marker (24, 28) ausgewertet werden.

7. Verfahren nach einem der vorhergehenden Ansprüche,
wobei einem erfassten Referenzmarker (28) ein Referenzort und/oder einem erfassten Objektmarker (24) der davon repräsentierte Sensor (18) zugeordnet wird.

8. Verfahren nach einem der vorhergehenden Ansprüche,
wobei ein Objektmarker (24) auf einer Schablone (22) mit einer Aufhängung (26) zum Anbringen an dem Sensor (18) angeordnet ist.

9. Verfahren nach Anspruch 8,
wobei in dem Objektmarker (24) eine Information über die Position des Sensors (18) relativ zu dem Objektmarker (24) eincodiert ist.

10. Verfahren nach einem der vorhergehenden Ansprüche,
wobei nur Sensorinformationen von Sensoren (18) dargestellt werden, die gemäß der Verknüpfung Nachbarn des erfassten Referenzmarkers (28) sind.

11. Verfahren nach einem der vorhergehenden Ansprüche,
wobei die Sensorinformationen als Überlagerung mit einem Livebild dargestellt werden.

12. Verfahren nach einem der vorhergehenden Ansprüche,
wobei die darzustellenden Sensorinformationen von dem Sensor (18), von einer an den Sensor (18) angeschlossenen Steuerung (20) und/oder aus einer Datenbank für Sensoren (18) ausgelesen werden.

13. Verfahren nach einem der vorhergehenden Ansprüche,
wobei die Sensorinformationen mindestens eine der folgenden Informationen umfassen: Name des Sensors (18), Adresse des Sensors (18), Typ des Sensors (18), ein grafisches Modell des Sensors (18), eine Ausrichtung und/oder ein Erfassungsbereich des Sensors (18), insbesondere ein Schutzfeld oder ein interessierender Bereich, ein Sensorparameter und/oder Messdaten des Sensors (18).

## Claims

1. A method for visualizing a machine area (10) using a visualization device, with at least one sensor (18) being arranged in the machine area (10), wherein for configuring the visualization device in the machine area (10) at least one reference marker (28) is mounted stationary with respect to a reference system of the visualization device so that its position becomes a reference location, and at least one object marker (24) is mounted on the at least one sensor (18), and wherein at least two respective markers (24, 28) are detected with a detection device, i.e. at least once a reference marker (28) and at least once an object marker (24), and the two markers (24, 28) are geometrically linked to one another in their mutual spatial position, so that a linkage structure is generated that localizes the at least one sensor (18) with respect to the reference location, wherein a user carrying out the configuration is automatically guided through the configuration by the detection device that prompts to detect markers and automatically carries out their linkage
and wherein, for visualizing the machine area (10) with the visualization device configured in this way, first a reference marker (28) is detected and then virtual sensor information from the environment of the reference marker (28) is displayed.

2. The method according to claim 1,
wherein markers (24, 28) are detected in pairs and linked to each other until the markers (24, 28) mounted in the machine area (10) are detected, wherein in particular it is checked whether one of the two markers (24, 28) detected in respective pairs has already been detected before.

3. The method according to claim 2,
wherein the detecting device prompts to detect first the one marker (24, 28) and then the other marker (24, 28) and then displays the generated linkage between the two markers (24, 28) to have it confirmed.

4. The method according to any of the preceding claims,
wherein the linking of the markers (24, 28) takes place in the form of a graph, wherein in particular the graph is arranged or rearranged such that adjacent nodes in the graph are also geometrically adjacent.

5. The method according to any of the preceding claims,
wherein the geometric linking of the markers (24, 28) is performed by evaluating a size and/or a format of the detected markers (24, 28).

6. The method according to any of the preceding claims,
wherein the geometric linking of the markers (24, 28) is performed by monitoring the movement of the detection device itself between detections of different markers (24, 28), by detecting at least two markers (24, 28) at the same time, or by evaluating detections during the alignment of the detection device from one marker (24, 28) to the other marker (24, 28).

7. The method according to any of the preceding claims,
wherein a reference location is associated with a detected reference marker (28) and/or the sensor (18) is associated with a detected object marker (24) representing the sensor (18).

8. The method according to any of the preceding claims,
wherein an object marker (24) is disposed on a template (22) having a suspension (26) for attachment to the sensor (18).

9. The method according to claim 8,
wherein information about the position of the sensor (18) relative to the object marker (24) is encoded in the object marker (24).

10. The method according to any of the preceding claims,
wherein only sensor information of sensors (18) which are neighbors of the detected reference marker (28) according to the linkage is displayed.

11. The method according to any of the preceding claims,
wherein the sensor information is displayed as an overlay with a live image.

12. The method according to any of the preceding claims,
wherein the sensor information to be displayed is read from the sensor (18), from a controller (20) connected to the sensor (18) and/or from a database for sensors (18).

13. The method according to any of the preceding claims,
wherein the sensor information comprises at least one of the following information: name of the sensor (18), address of the sensor (18), type of the sensor (18), a graphical model of the sensor (18), an orientation and/or a detection area of the sensor (18), in particular a protective field or an area of interest, a sensor parameter and/or measurement data of the sensor (18).

## Revendications

1. Procédé de visualisation d'une zone de machine (10), dans lequel est disposé au moins un capteur (18), avec un dispositif de visualisation, dans lequel, pour configurer le dispositif de visualisation dans la zone de machine (10), au moins un marqueur de référence (28) est monté de manière fixe par rapport à un système de référence du dispositif de visualisation, de sorte que sa position devienne un lieu de référence, et au moins un marqueur d'objet (24) est monté sur l'au moins un capteur (18), et dans lequel au moins deux marqueurs respectifs (24, 28) sont détectés avec un dispositif de détection, c'est-à-dire qu'au moins une fois un marqueur de référence (28) et au moins une fois un marqueur d'objet (24, 28), et les deux marqueurs (24, 28) sont géométriquement liés l'un à l'autre dans leur position spatiale mutuelle, de sorte qu'une structure de liaison est générée avec laquelle l'au moins un capteur (18) est localisé par rapport au lieu de référence, dans lequel un utilisateur effectuant la configuration est automatiquement guidé à travers la configuration par le dispositif de détection qui demande respectivement à détecter les marqueurs et effectue automatiquement leur liaison.
et dans lequel, pour visualiser la zone de la machine (10) avec le dispositif de visualisation configuré de cette manière, un marqueur de référence (28) est d'abord détecté, puis des informations de capteur virtuel provenant de l'environnement du marqueur de référence (28) sont affichées.

2. Procédé selon la revendication 1,
dans lequel les marqueurs (24, 28) sont détectés par paires et reliés entre eux jusqu'à ce que les marqueurs (24, 28) montés dans la zone de la machine (10) soient détectés, en vérifiant notamment si l'un des deux marqueurs (24, 28) détectés respectivement par paires a déjà été détecté auparavant.

3. Procédé selon la revendication 2,
dans lequel le dispositif de détection demande de détecter d'abord un marqueur (24, 28) puis l'autre marqueur (24, 28) et affiche ensuite le lien généré entre les deux marqueurs (24, 28) pour les faire confirmer.

4. Procédé selon l'une des revendications précédentes,
dans lequel la liaison des marqueurs (24, 28) s'effectue sous la forme d'un graphe, le graphe étant notamment disposé ou réarrangé de telle sorte que des noeuds adjacents dans le graph soient également géométriquement adjacents.

5. Procédé selon l'une des revendications précédentes,
dans lequel la liaison géométrique des marqueurs (24, 28) est réalisée en évaluant une taille et/ou un format des marqueurs détectés (24, 28).

6. Procédé selon l'une des revendications précédentes,
dans lequel la liaison géométrique des marqueurs (24, 28) est réalisée en surveillant le mouvement propre du dispositif de détection entre les détections de différents marqueurs (24, 28), en détectant simultanément au moins deux marqueurs (24, 28), ou en évaluant les détections pendant l'alignement du dispositif de détection d'un marqueur (24, 28) à l'autre marqueur (24, 28).

7. Procédé selon l'une des revendications précédentes,
dans lequel un emplacement de référence est associé à un marqueur de référence détecté (28) et/ou le capteur (18) est associé à un marqueur d'objet détecté (24) représentant le capteur (18).

8. Procédé selon l'une des revendications précédentes,
dans lequel un marqueur d'objet (24) est disposé sur un gabarit (22) avec une suspension (26) destinée à être fixée au capteur (18).

9. Procédé selon la revendication 8,
dans lequel une information relative à la position du capteur (18) par rapport au marqueur d'objet (24) est codée dans le marqueur d'objet (24).

10. Procédé selon l'une des revendications précédentes,
dans lequel seules les informations de capteurs (18) qui sont voisins du marqueur de référence détecté (28) selon la liaison sont affichées.

11. Procédé selon l'une des revendications précédentes,
dans lequel les informations du capteur sont affichées en superposition avec une image en direct.

12. Procédé selon l'une des revendications précédentes,
dans lequel les informations du capteur à afficher sont lues par le capteur (18), par une commande (20) connectée au capteur (18) et/ou d'une base de données pour capteurs (18).

13. Procédé selon l'une des revendications précédentes,
dans lequel les informations du capteur comprennent au moins l'une des informations suivantes : le nom du capteur (18), l'adresse du capteur (18), le type du capteur (18), un modèle graphique du capteur (18), un alignement et/ou une zone de détection du capteur (18), en particulier un champ de protection ou une zone d'intérêt, un paramètre du capteur et/ou des données de mesure du capteur (18).
